Europäisches Patentamt

(19) European Patent Office

Office européen des brevets

(11) Publication number: **0 067 095**
**B1**

## (12) EUROPEAN PATENT SPECIFICATION

(45) Date of publication of patent specification: **27.07.88**

(51) Int. Cl.⁴: **G 11 B 7/26**

(21) Application number: **82400921.1**

(22) Date of filing: **18.05.82**

(54) Method for making rigid optical discs.

(30) Priority: **18.05.81 US 264315**

(43) Date of publication of application:
**15.12.82 Bulletin 82/50**

(45) Publication of the grant of the patent:
**27.07.88 Bulletin 88/30**

(84) Designated Contracting States:
**BE DE FR GB IT NL**

(56) References cited:
**EP-A-0 037 607**
**EP-A-0 060 017**
**FR-A-2 147 120**
**FR-A-2 313 733**
**GB-A-1 321 088**
**US-A-3 373 413**
**US-A-3 381 085**
**US-A-4 222 070**

(73) Proprietor: **EASTMAN KODAK COMPANY**
**343 State Street**
**Rochester New York 14650 (US)**

(72) Inventor: **Geyer, Frederick Francis**
**96 Essla Drive**
**Rochester New York 14612 (US)**

(74) Representative: **Blickle, K. Werner, Dipl.-Ing.**
**et al**
**KODAK AKTIENGESELLSCHAFT Postfach 369**
**D-7000 Stuttgart-Wangen 60 (DE)**

## Description

The present invention relates to the art of optical disc recording and, more particularly, it relates to improvements in methods for making rigid optical discs.

The currently preferred optical disc technology employs disc elements with spiral or concentric tracks of minute (usually on the order of a micron or less in size), optically-detectable marks. One real-time mode of recording (writing) such marks is by scanning tracks on the disc with an equivalently small beam of radiation (e.g., from a laser), which is modulated "off or on" according to an electrical signal representative of the information to be written. Information is recovered (read) by scanning the tracks with a larger, but still very tightly focused, radiation (e.g. light) spot. The recovered information is in the form of a fluctuating electrical signal obtained from a photodetector that senses the read-out light reflected from the recorded disc.

In order to write and read information in the form of such minute markings, optical systems of high numerical aperture are used to focus light to equivalently minute spots. Such optical systems have extremely small depths of focus and the proper positional relation between the writing or reading optical system and the optical disc record surface must be stringently maintained. Therefore it is highly desirable that the optical disc support surface underlying the record layer be smooth (i.e. reltively free of high-spatial-frequency variations from a nominal plane, e.g., such as minute pits or humps) and flat (i.e. relatively free of large amplitude, low spatial frequency variations, e.g., such as undulating surface variation of the support). Although complex focus-servo devices can effect lens adjustment to compensate for imperfect smoothness and flatness, these devices add to the cost and fragileness of the write/read apparatus. The required complexity of the focus-servo devices is proportional to the degree of such disc imperfections and the speed of operation.

One approach to achieve requisite smoothness and flatness has been to form the disc substrate of glass with a ground and polished surface. This requires a time consuming and costly fabrication procedure. Another approach is to mold a plastic disc substrate with a generally smooth surface and apply a surface smoothing sub-layer. However, it is extremely difficult to mold such plastic discs having adequate surface characteristics, and this support fabrication method is also relatively costly.

US—A—3 381 085 discloses a method of duplicating video disc recordings by photographic contact printing information contained on a working master onto a copy disc. The latter comprises a thin disc of plastic material which is disposed between the two halves of a split ring. Such ring clamps the outer periphery of the thin disc during the reproduction process, with special looking means also serving the purpose of stretching the disc uniformly so that the disc is in a flat plane.

US—A—3 373 413 discloses a method of fabricating a magnetic disc by stretching a membrane radially and glueing rings on opposite sides of the membrane.

In view of the foregoing discussion, an object of this invention is to provide a more economical method for making high quality (i.e. both smooth and flat) rigid optical discs. The invention is set out in claim 1. Thus the process of the invention involves the step of laminating a flexible substrate (which bears, on one major surface thereof, an optical recording layer) to the entire surface of a support member which functions to render the resulting laminated structure rigid. During the lamination step, the flexible substrate is radially tensioned so that it assumes a planar configuration while the adhesive (i.e. the laminant) hardens. The optical disc fabrication method of the invention is economically advantageous in that (1) the flexible substrate component can be made by conventional low cost web-coating techniques, and (2) the support member component need not have a perfectly smooth and flat surface since minor surface imperfections in the support may be masked by an adhesive and thus be imperceptible in the recording layer.

The subsequent more detailed description of preferred embodiments of the present invention refers to the attached drawings wherein:

Figure 1 is an exemplary sectional view illustrating problems incident to prior art lamination techniques, when applied to the field of the present invention;

Figure 2 is an exemplary sectional view illustrating how the present invention obviates the problems shown in Fig. 1;

Figures 3A—3D are schematic illustrations of fabrication steps useful in accordance with one preferred embodiment of the present invention; and

Figure 4 is a cross-sectional view, exaggerated greatly in the thickness dimension, of one preferred embodiment of optical disc in accord with the present invention.

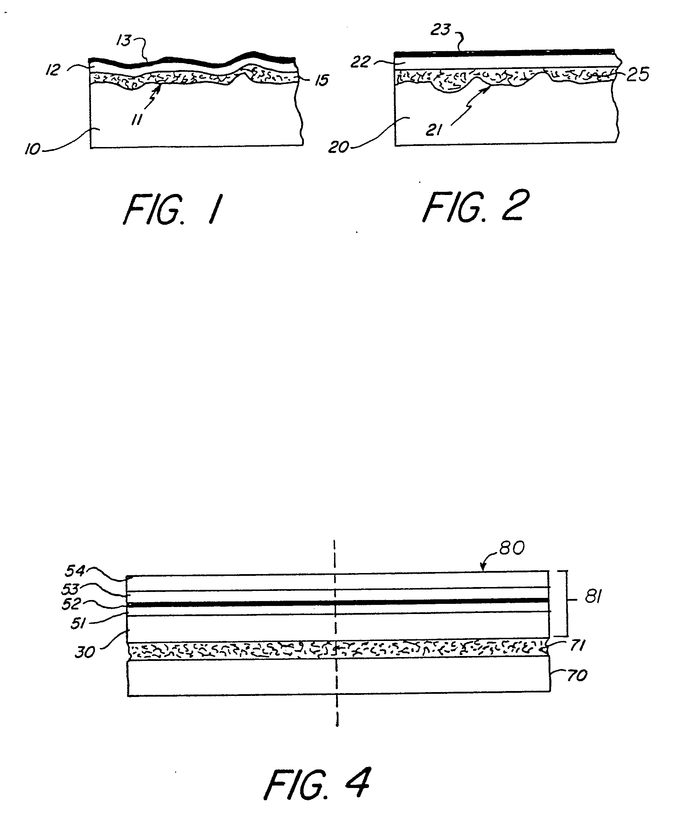

Before proceeding with the description of details of preferred embodiments of the invention, attention is directed briefly to Figs. 1 and 2 wherein surfaces 11 and 21 of supporting members 10 and 20 represent typical molded plastic or unpolished glass surfaces. Such supports can be provided with a coating of an optical disc recording layer or, as illustrated, have affixed thereto flexible substrates 12 and 22, respectively bearing coatings 13 and 23 of recording material. Although the unsmoothness of surfaces 11 and 21 is greatly exaggerated in Figs. 1 and 2, the problems which such roughness present, even on a reduced scale, are very significant when dealing with high numerical aperture lenses and micron size information markings.

Referring now in particular to Fig. 1, there specifically is illustrated the problems encountered when using prior art lamination techniques to laminate a flexible substrate 12 (e.g. with adhesive 15) to support 10, e.g. to enhance its rigidity for handling. Thus, when conventional roller or vacuum lamination pressure is applied, the disc substrate 12 conforms to some significant extent to the non-uniformities in the surface 11. A similar problem is presented when dust particles or other minute debris is entrapped between the surface 11 and substrate 12. As pointed out above, the resultant unsmoothness of the recording layer 13 on substrate 12 presents considerable difficulty in focus maintenance. An additional problem, not illustrated in Fig. 1, is that typical substrates, such as 12, exhibit a macroscopic lack of flatness, e.g. curling, wrinkling, etc.

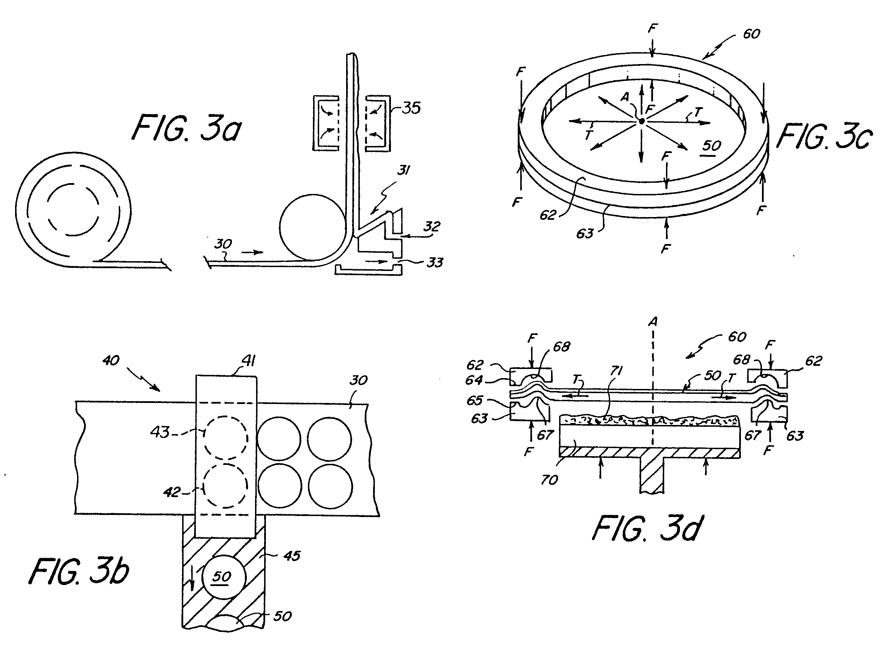

Now referring to Fig. 2, it can be seen that the substrate 22, laminated to similarly unsmooth surface 21 (by adhesive 25), does not conform to the non-uniformities of surface 21. Instead, the the substrate 22 and its coating 23 exhibit a much smoother configuration. As indicated above, this result is accomplished, in general, by constraining the disc substrate 22 in radially symmetrical tension during lamination. This step in the method of the present invention also facilitates improved macroscopic flatness. Preferred fabrication techniques will now be described with respect to Figs. 3A—3D.

It should be understood that flexible disc substrates, suitable for lamination in accord with the inventive techniques illustrated in Figs. 3C and 3D, can be prepared in ways other than shown in Figs. 3A and 3B (e.g. first precut and then spin coated). However, a significant advantage of the present invention is that it facilitates the manufacture of disc elements by web coating technology. Thus, a preferred fabrication procedure of the present invention includes coating a web of flexible disc substrate material (which contains many individual disc substrates) in a single run. This can be accomplished e.g. by moving the flexible web 30 past a suitable web coating device 31. The coating device shown in Fig. 3A is a slide hopper having coating liquid inlet 32 and vacuum outlet 33 and is of a kind well known in the art (see e.g. US—A—3,220,877). Many other devices for continuously coating a moving flexible web are known in the art and useful in accordance with the present invention (see e.g. US—A—3,681,294). After receiving the desired coating(s), the web 31 is transported through an air drying station 35 and moved on to a cutting station 40 shown in Fig. 3B.

The cutting station is schematically illustrated as comprising a reciprocating platen 41 having a pair of circular cutting dies 42, 43 which stamp successive discs 50 from web 30. The discs 50 are then transported, e.g. by vacuum conveyor belt 45, to a lamination station illustrated in Figs. 3C and 3D. It will be appreciated that discs can be cut from the web in a variety of other well known techniques.

At laminating station 60 the coated flexible disc 50 is constrained around its periphery by cooperating clamping rings 62 and 63, which are urged together with substantially uniform forces by suitable pressure means (e.g. hydraulic), indicated by arrows F in Figs. 3C and 3D. As shown best in Fig. 3D, rings 62 and 63 are constructed to impart radially symmetric (i.e. symmetric with respect to axis A) tension to the clamped disc 50. Specifically, the rings include edge gripping surfaces 64 and 65, which cooperate to hold the outer periphery of the coated disc substrate 50, and cooperating male and female tensioning surfaces 67, 68, which mate to tension the disc substrate symmetrically with respect to the central axis A of the rings (and the coincident central axis of the disc substrate).

At this stage, it will be useful to those wishing to practice the present invention to describe some general and preferred characteristics of disc substrates and some guidelines regarding substrate tensioning. A wide variety of substrate materials are useful according to the present invention. In general, plastic matrials are preferred; however other films, e.g. flexible metal films, are useful. The substrates should have a Young's Modules that is sufficiently high to allow the desired support tensioning-stress with small strain. The substrates preferably have high dimensional stability to environmental stresses (e.g. temperature and humidity change) that will be encountered in the intended usage modes. The substrates also preferably have a surface quality subject to coating and adhesive bonding.

With respect to nominal thickness, it is preferred that plastic substrates have a thickness in the range of about 0,05 mm (2 mils) to about 0,135 mm (7 mils). Other thicknesses are operable; however, it has been found that substrates' variation from a nominal thickness tends to be directly proportional, as a generally constant percentage, to the magnitude of the nominal thickness. Therefore, thinner substrates are preferred up to the point where the handling and manufacturing steps result in substrate deformation, e.g. wrinkling. Such problems have been noted with respect to 0,025 mm (1 mil) substrates, however, they are otherwise operable. One specific preferred substrate material is 100 micron thick polyethylene terephthalate film base which has been extruded and biaxially oriented and has a Young's Modules of $2,3 \times 10^3 N/mm^2$ ($2,3 \times 10^5$ kilograms per square centimeter).

With respect to tensioning forces, in general it is preferred that the substrate tension be just adequate to achieve the desired degree of substrate planarity and maintain this planarity against forces occurring because of adhesive dimensional change during adhesive hardening. The tension should not be so great as to cause deformation (e.g. bowing) of the disc support. Thus operable tension forces are in the range of from slightly above 0 Newton per square millimeter to just below the elastic limit for the substrate material selected and should be selected in view of particular system characteristics such as the desired degree of planarity, the degree of flatness of the selected substrate and degree of dimensional change of the selected adhesive.

Referring again to Figs. 3-A to 3-D, with coated disc substrate constrained in a symmetrically tensioned condition, a generally congruent disc support member 70 is moved into closely spaced, generally concentric relation with the uncoated surface of disc substrate 50. As shown in Fig. 3D the disc support 70 has a pre-applied coating of compliant adhesive 71 on its opposing surface, and is moved so that the adhesive couples the disc substrate 50 and disc support 70. In order to avoid trapping air between the substrate 50 and adhesive bearing support 70, it is preferred to initiate contact at a central point or edge with successive contacting portions following in an air expelling manner. This can be accomplished e.g. by forcing the centers of the substrate and support toward each other during the contact period and releasing them after contact. The adhesive is allowed to dry or otherwise firmly set and lamination is complete. It will be appreciated that the periphery of the resulting laminate structure can be trimmed to provide more uniform edge congruence.

Desirable adhesives have good adhesion to the substrate and disc support and a small dimensional change upon setting. Quick setting adhesives are preferred. Specific useful materials include many commercially available photopolymerizable adhesives, thermosetting adhesives and chemically catalyzed adhesives. It is highly preferred that the adhesives generate minimal liquid or gas during setting.

With the foregoing explanation of one preferred mode of fabrication in mind, a preferred disc configuration constructed by that mode can be described with respect to Fig. 4. Specifically, the laminate disc 80 comprises a flexible multilayer element 81 disc support 70 coupled by adhesive 71. As shown, the coated disc substrate 50 comprises a substrate 30 having a surface smoothing layer 51, a reflective layer 52, a dye-binder recording layer 53 and a protective transparent overcoat layer 54. Considering the multi-layer nature of element 60, one further appreciates why susceptibility to web coating is a highly desirable feature of the invention.

Having now described exemplary preferred methods and configurations, it is pointed out that the present invention is envisioned to encompass other variational modes and configurations. For example, the support-disc to which the flexible, coated disc substratre is laminated can be either flexible or rigid. In flexible support disc embodiments a good degree of rigidity occurs by lamination of two flexible members.

Also, using a flexible support, further rigidity can be provided by using a rigid coupling adhesive, e.g. "Touch 'n Foam", a trademarked adhesive which is commercially available from Convenience Products, Inc. of St. Louis, Missouri, U.S.A.

## Claims

1. A method of fabricating a rigid optical disc by

(a) constraining a flexible substrate, having a recording layer on one major surface, in radially symmetric tension so that the substrate assumes a planar configuration; and

(b) laminating the entire surface of a support member to the other major surface of said substrate while the flexible substate is constrained in such planar configuration.

2. The method defined in Claim 1 characterized in that said laminating step comprises supplying a compliant laminating material between said substrate and said support member and supporting said substrate and said support member in closely spaced relation so that said compliant material couples them.

3. The method defined in Claim 1 or 2, characterized in that said support member is substantially rigid and unfinished.

4. The method defined in Claim 1 or 2, characterized in that said support member is formed of flexible material.

5. The method defined in Claims 1 to 4, characterized in that said flexible substrate has been cut from a flexible web on which said recording layer has been coated.

## Patentansprüche

1. Verfahren zur Herstellung starrer optischer Speicherplatten, dadurch gekennzeichnet, daß

(a) ein flexibler Schichtträger, der auf der einen Hauptfläche eine Aufzeichnungsschicht besitzt, radialsymmetrisch so gespannt wird, daß der Schichtträger plan liet; und

(b) die gesamte Fläche eines Trägerelements mit der anderen Hauptfläche des Schichtträgers laminiert wird, während der flexible Schichtträger sich in dieser planen Lage befindet.

2. Verfahren nach Anspruch 1, dadurch gekennzeichnet, daß während des Laminiervorgangs ein nachgiebiges Laminiermaterial zwischen den Schichtträger und das Trägerelement gebracht wird, und daß der Schichtträger sowie das Trägerelement sich in einem so engen Abstand voneinander befinden, daß das nachgiebige Material sie miteinander verbindet.

3. Verfahren nach Anspruch 1 oder 2, dadurch gekennzeichnet, daß das Trägermaterial im wesentlichen starr und unbearbeitet ist.

4. Verfahren nach Anspruch 1 oder 2, dadurch gekennzeichnet, daß das Trägerelement aus einem flexiblen Material besteht.

5. Verfahren nach Anspruch 1 bis 4, dadurch gekennzeichnet, daß der flexible Schichtträger von einem flexiblen Band abgeschnitten wird, das mit einer Aufzeichnungsschicht versehen ist.

## Revendications

1. Procédé de fabrication d'un disque optique rigide consistant a:

a) contraindre un support flexible présentant une couche d'enregistrement sur l'une de ses faces principales, au moyens de forces de tension symétrique radiales de manière que le support prenne une configuration plane; et

b) calandrer la surface totale d'un organe, support sur l'autre face principale du support flexible tout en maintenant ledit support flexible dans la configuration plane.

2. Procédé conforme à la revendication 1, caractérisé en ce que l'opération de calandrage comprend la fourniture d'un matériau maléable entre l'organe support et le support flexible et le maintien rapproché dudit organe support et dudit support flexible de manière que le matériau maléable les solidarise.

3. Procédé conforme à l'une quelconque des revendications 1 et 2, caractérisé en ce que l'organe support est essentiellement rigide et présente un état de surface grossier.

4. Procédé conforme à l'une quelconque des revendications 1 et 2, caractérisé en ce que l'organe support est formé d'un matériau flexible.

5. Procédé conforme à l'une quelconque des revendications 1 et 4, caractérisé en ce que ledit support flexible a été découpée à partir d'une bande flexible sur laquelle on a déposée une couche d'enregistrement.

FIG. 1

FIG. 2

FIG. 4

FIG. 3a

FIG. 3c

FIG. 3b

FIG. 3d

0 067 095